# FASCICULE DE BREVET EUROPEEN

(11) **EP 0 617 788 B1**
(45) Date de publication et mention de la délivrance du brevet: **23.09.1998**
(21) Numéro de dépôt: 93912531.6
(22) Date de dépôt: 23.06.1993
(51) Int. Cl.: G01N 1/12

(54) **DISPOSITIF DE PRELEVEMENT D'ECHANTILLONS D'UN LIQUIDE DANS UN TANK OU DANS UN REACTEUR CHIMIQUE**
VORRICHTUNG ZUR ENTNAHME VON FLÜSSIGKEITSPROBEN AUS EINEM TANK ODER AUS EINEM CHEMISCHEN REAKTOR
DEVICE FOR SAMPLING A LIQUID IN A TANK OR CHEMICAL REACTION VESSEL

(30) Priorité: 02.07.1992 CH 2078/92
(43) Date de publication de la demande: 05.10.1994
(73) Titulaire: BIAR S.A., CH-1948 Lourtier (CH)
(72) Inventeur: MASSON, Guy, CH-1948 Sarreyer (CH)
(86) Numéro de dépôt international: CH9300161
(87) Numéro de publication internationale: WO9401752

(56) Documents cités:
- DE-C- 588 790
- FR-A- 718 955
- US-A- 1 494 631
- US-A- 2 198 324
- US-A- 5 029 484
- SOVIET INVENTIONS ILLUSTRATED Section EI, Week 9007, 28 Mars 1990 Derwent Publications Ltd., London, GB; Class S03, AN 90050641/07 & SU,A,1 478 079 (PAINT VARNISH IND) 7 May 1989

## Description

La présente invention se rapporte à un dispositif de prélèvement d'échantillons d'un liquide dans un tank ou un réacteur chimique, et plus particulièrement à un dispositif qui comporte un godet qui est muni d'une cavité et d'ouvertures de remplissage et d'écoulement, le godet étant monté déplaçable, sous l'action d'un piston, dans un tube de guidage qui est monté sur un tank ou sur un réacteur chimique.

Les dispositifs de prélèvement d'échantillons sont utilisés dans l'industrie chimique pour prélever des échantillons de liquides contenus dans des tanks ou des réacteurs chimiques dans le but d'effectuer des analyses de laboratoire. Ces liquides sont le plus souvent très toxiques et volatiles et par conséquent le prélèvement d'échantillons nécessite de nombreuses précautions, d'une part pour éviter que l'utilisateur entre en contact avec le liquide toxique et d'autre part pour éviter la pollution par dégagement dans l'air d'un liquide toxique et volatile.

Les formes d'exécutions connues de dispositifs de prélèvement d'échantillons présentent de nombreux inconvénients. En effet les formes d'exécutions connues comportent généralement des dispositifs munis de conduits qui prélèvent le liquide par des dispositifs à succion ou par des pompes aspirantes, ce qui rend parfois impossible le prélèvement de l'échantillon en raison du fait que le liquide n'arrive pas à remonter dans le dispositif de prélèvement lorsque le réacteur est sous vide ou lorsque la tension de vapeur du liquide est basse. Des formes d'exécutions utilisent des gaz qui sont destinés à aspirer ou à repousser l'échantillon de liquide hors du réacteur, mais ces formes d'exécutions présentent un inconvénient lié à l'utilisation d'un gaz sous pression dont le risque principal peut être l'éclatement d'un joint ce qui peut présenter un grave danger pour l'opérateur en cas de fuite vers l'extérieur. De plus tous ces dispositifs connus présentent l'inconvénient majeur de rejeter dans l'atmosphère une quantité importante de gaz pollués. Une forme d'exécution d'un plongeur déplaçable dans un tube est connue par le brevet US 5,029,484, mais ce dispositif présente l'inconvénient de ne pouvoir fonctionner que dans un dispositif ouvert, c'est-à-dire qu'il ne peut fonctionner correctement que si la pression extérieure est égale à la pression règnant dans le tank ou dans le réacteur chimique.

Une autre forme d'exécution est connue par le brevet DE-C-588790. Elle comporte un godet de prélèvement, muni de deux soupapes, dont la position doit être inversée pour le déversement dans le conduit de prélèvement.

Le but de la présente invention consiste donc à remédier aux inconvénients précités des formes d'exécutions connues.

Les buts sont atteints avec le principe de l'invention tel que décrit par la revendication 1.

Selon le principe de l'invention, un godet qui comporte une cavité et des ouvertures de remplissage et d'écoulement est monté déplaçable sous l'action d'un piston, dans un tube qui est monté sur un tank ou sur un réacteur chimique. En position basse, le godet se trouve dans le liquide contenu dans le tank et le liquide s'introduit dans le godet par les ouvertures de remplissage. Sous l'action du piston le godet est remonté dans le tube jusqu'à ce que le conduit d'écoulement se trouve au dessus d'un anneau qui fait office de collecteur. La dimension et l'angle du conduit d'écoulement sont déterminés de manière à ce que le liquide s'écoule du godet par gravité en un filet continu de liquide qui décrit une parabole jusque sur le collecteur qui l'amène ensuite dans une vanne de prélèvement. Le principe de l'invention présente de nombreux avantages dont le principal est qu'il permet des prélèvements de liquides quelles que soient les conditions de pression et de température qui règnent à l'intérieur du réacteur. Il rend possible le prélèvement d'un liquide ayant une tension de vapeur très basse ou étant soumis au vide, et également lorsque le liquide cristallise à la température ambiante. Un autre avantage important consiste dans le fait que la réalisation particulière du conduit d'écoulement permet de favoriser une vidange totale du godet et dans le fait que la disposition du dispositif de prélèvement permet à l'ensemble du dispositif de se vider et de s'égoutter totalement du liquide qui retourne directement dans le tank ou dans le réacteur chimique. Cet avantage permet d'avoir un échantillon de liquide directement représentatif lors du prélèvement suivant. Le principe de l'invention présente encore l'avantage de permettre le prélèvement d'échantillons en cours de distillation ou pendant une réaction chimique sans modifier la pression ou le vide qui règne à l'intérieur du réacteur. La légère perte de liquide qui intervient lors du passage de la position basse de remplissage à la position d'écoulement du godet est négligeable parce que le changement de position s'effectue dans un temps très court. Le principe de l'invention est aussi particularisé par le fait que le filet de liquide s'écoule vers le conduit de prélèvement en décrivant une parabole.

Les dessins annexés illustrent schématiquement et à titre d'exemple les principes de l'invention.

La figure 1 est une vue d'ensemble en coupe de côté de l'ensemble du dispositif de prélèvement en position de remplissage du godet.

La figure 2 est une vue d'ensemble en coupe de côté du dispositif de prélèvement en position d'écoulement du godet.

La figure 3 est une vue d'ensemble en coupe de côté du dispositif montrant une forme d'exécution de la partie inférieure d'un tube qui comporte un fourreau de protection.

La figure 4 est une vue en coupe de détail d'une forme d'exécution d'un godet.

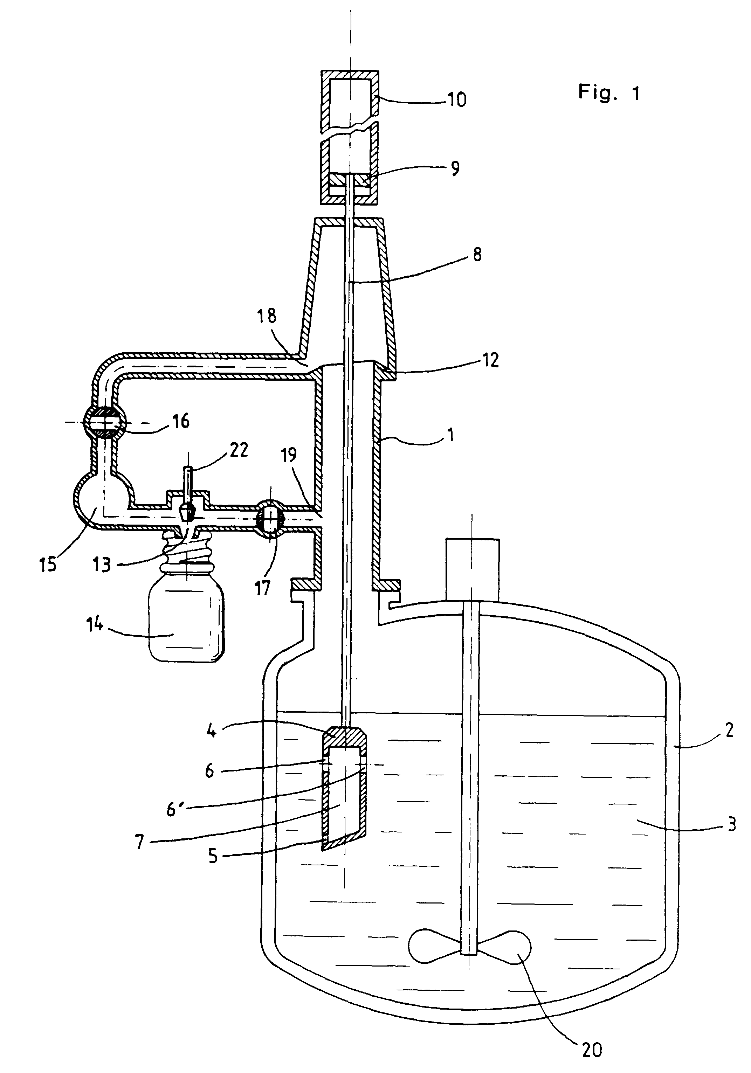

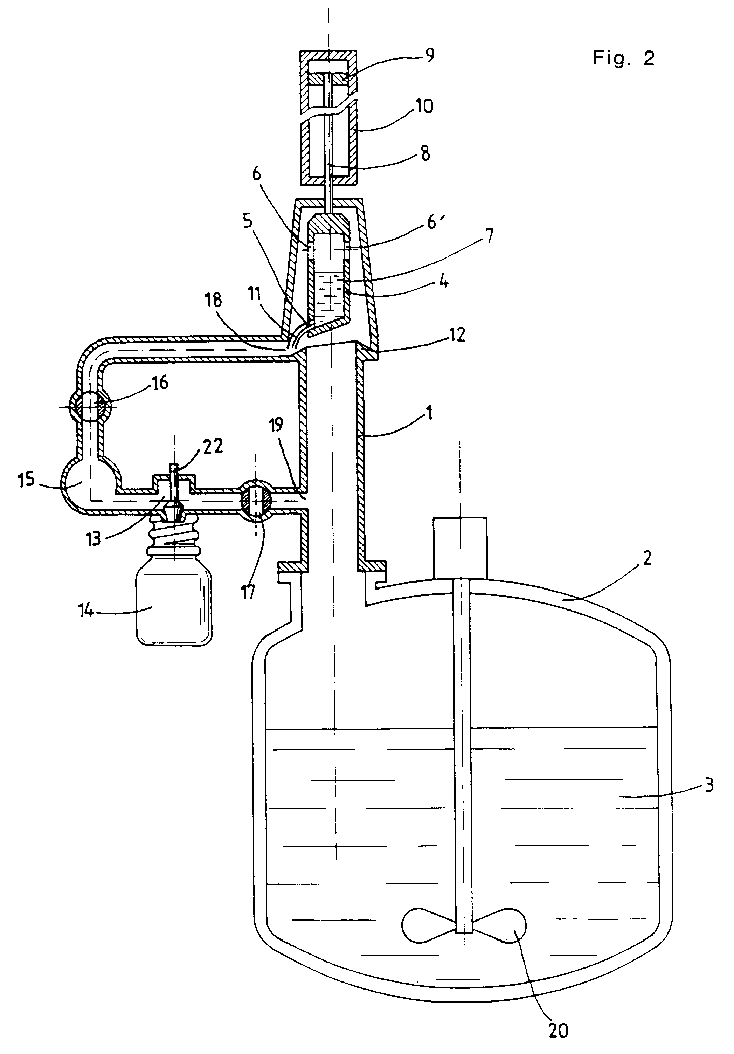

En référence aux figures 1 et 2, un tube de guidage 1 est monté sur un réacteur chimique 2 qui contient un liquide 3. Un godet 4 est relié à une tige 8 qui est elle-même reliée à un dispositif de déplacement constitué, à titre d'exemple par un piston 9 et un cylindre 10. Le godet 4 comporte une cavité 7, des ouvertures de remplissage 6 et 6', et un conduit d'écoulement 5. Le tube 1 comporte une ouverture 18 qui constitue un conduit d'amenée du liquide qui est relié par une vanne d'entrée 16 à une vanne de prélèvement 13. Le tube 1 comporte une ouverture 19 qui constitue un conduit de vidange qui est relié à une vanne de retour 17 elle-même reliée au dispositif de prélèvement 13. Au niveau de l'ouverture 18, le tube 1 comporte un collecteur 12 qui est constitué par un anneau. Un regard de coulée 15 est disposé entre la vanne d'entrée 16 et la vanne de prélèvement 13. Le liquide est prélevé dans le récipient 14 en tirant le pointeau 22. Le liquide 3 contenu dans le tank 2 est agité par un agitateur 20.

En position de remplissage, le godet est placé dans la position basse montrée sur la figure 1, position dans laquelle les ouvertures de remplissage 6 et 6' se trouvent au dessous de la surface du liquide 3, de manière à ce que le liquide remplisse la cavité 7 du godet. Comme montré sur la figure 2, la vanne d'entrée 16 est actionnée en position ouverte et le piston 9 est actionné de manière à remonter le godet en position haute, c'est-à-dire jusqu'à la position où le conduit d'écoulement 5 se trouve au dessus du collecteur 12. Dans cette position, le liquide s'écoule du godet 4 par le conduit d'écoulement 5 et forme un filet qui décrit une parabole et qui s'écoule dans le collecteur 12. Le liquide s'écoule ensuite à travers la vanne 16 vers la vanne de prélèvement 13. La fin de l'écoulement peut être controlé dans le regard de coulée 15. La vanne 16 est ensuite fermée et le pointeau 22 étant tiré le liquide nécessaire peut s'écouler dans le récipient 14. Dès que la quantité de liquide à prélever est suffisante le pointeau 22 est replacé en position fermée et la vanne 17 est ouverte de manière à vidanger le dispositif de prélèvement du liquide superflu, liquide qui peut s'écouler par l'ouverture 19 et par le tube 1 et retourner dans le réacteur chimique. Lors du passage de la position basse à la position haute du godet, une faible quantité de liquide peut s'écouler par le conduit d'écoulement 5 et retourner dans le réacteur chimique ce qui ne présente aucun inconvénient puisque la vitesse de déplacement du godet peut être règlée de manière à ce que la plus grande partie du liquide remplissant la cavité, se trouve encore dans la cavité lorsque le godet atteint la position haute.

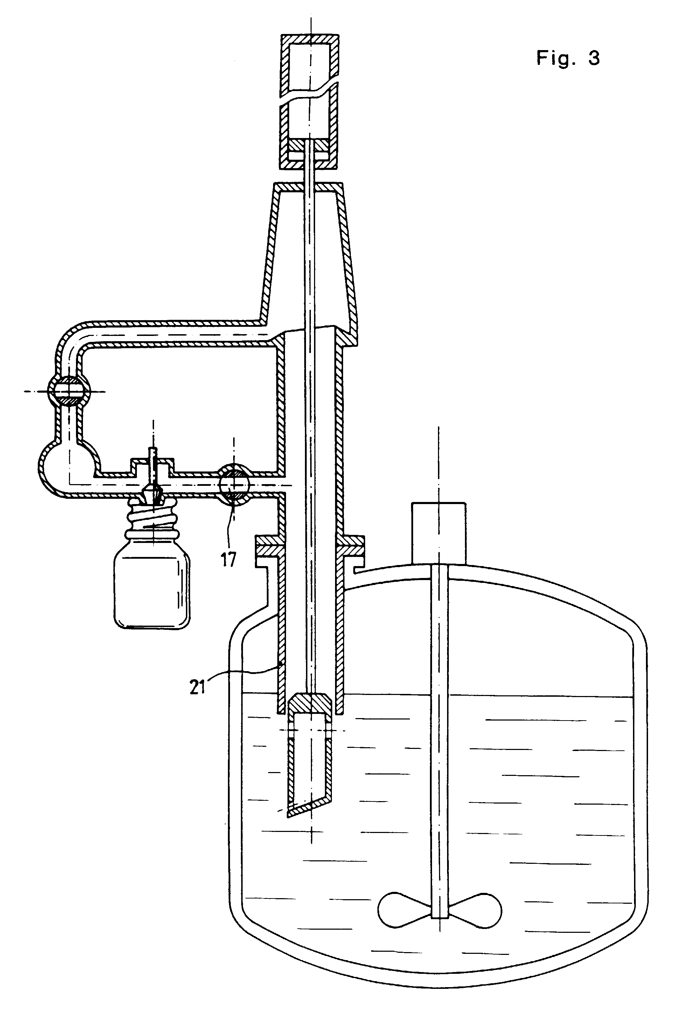

La figure 3 montre une forme d'exécution qui comporte un fourreau 21 qui est destiné à protéger le godet des turbulences du liquide qui peuvent être provoquées par l'agitateur 20

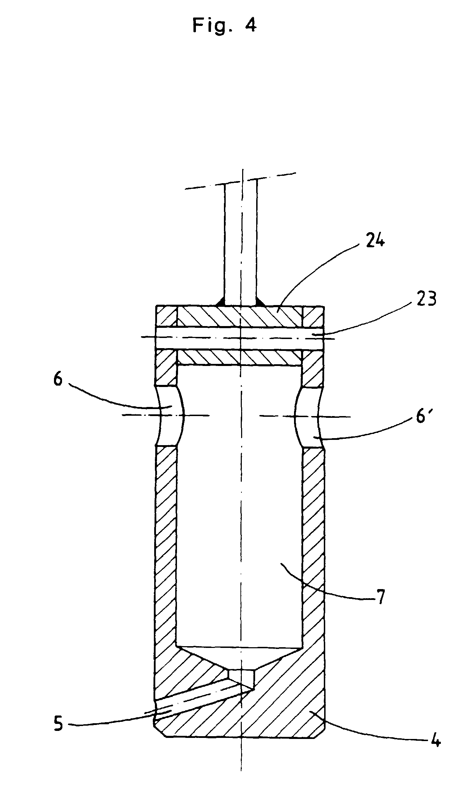

La figure 4 montre en détail le godet 4 qui comporte la cavité 7, les ouvertures de remplissage 6 et 6' et le conduit d'écoulement 5. La partie supérieure du godet est reliée par un axe 23 à un élément inférieur 24 du dispositif de déplacement.

Les figures 1 et 2 montrent, à titre d'exemple, un dispositif de déplacement sous forme d'un piston qui peut être actionné pneumatiquement. Le principe du dispositif de déplacement est indépendant du principe de l'invention, la tige 8 reliée au godet pouvant également être actionnée par un dispositif de déplacement mécanique, à crémaillère par exemple, ou par un dispositif à entrainement magnétique.

L'ensemble du dispositif peut être réalisé avec divers matériaux couramment utilisés dans l'industrie chimique, par exemple l'acier inoxydable, les métaux nobles, l'acier émaillé, le téflon, le verre ou les revêtements en résine fluorocarbone.

## Revendications

1. Dispositif de prélèvement d'échantillons d'un liquide dans un tank ou dans un réacteur chimique comportant un godet (4) qu'un dispositif de déplacement déplace dans un tube (1), le godet étant déplaçable en deux positions, une position dans laquelle il est immergé dans un liquide (3) contenu dans un réacteur chimique (2), et une position dans laquelle il se trouve au niveau d'un collecteur (12), caractérisé par le fait que le godet (4) comporte une cavité (7), des ouvertures de remplissage (6, 6') et un conduit d'écoulement (5), et par le fait que le godet (4), dont les ouvertures de remplissage et le conduit d'écoulement sont dépourvus de moyens d'obturation, est destiné, dans une position, à être immergé dans le liquide (3) de manière à ce que le liquide (3) puisse s'introduire dans la cavité (7) par les ouvertures de remplissage (6, 6'), et est destiné, dans une autre position, à se trouver au dessus du collecteur (12) de manière à ce que le liquide contenu dans la cavité (7) puisse s'écouler par le conduit d'écoulement (5) dans une ouverture (18) et s'écouler dans une vanne d'entrée (16) et dans une vanne de prélèvement (13).

2. Dispositif de prélèvement selon la revendication 1, caractérisé par le fait que le conduit d'écoulement (5) est disposé selon un angle dans la partie inférieure du godet (4) de manière à ce que le liquide contenu dans le godet puisse s'écouler totalement en formant un filet continu.

3. Dispositif de prélèvement selon la revendication 1, caractérisé par le fait que le collecteur (12) présente une forme conique dans sa partie supérieure de manière à constituer une rigole de récupération du liquide.

4. Dispositif de prélèvement selon la revendication 1, caractérisé par le fait que le tube (1) comporte une ouverture (18) pour l'entrée du liquide et une ouverture de vidange (19) pour le retour du liquide, et par le fait qu'une vanne d'entrée (16), une vanne de prélèvement (13) et une vanne de vidange (17) sont disposées entre les deux ouvertures (18 et 19).

5. Dispositif de prélèvement selon la revendication 1, caractérisé par le fait que le godet (4) est relié par une tige (8) à un dispositif de déplacement constitué par un piston (9) et un cylindre (10).

6. Dispositif de prélèvement selon la revendication 1, caractérisé par le fait que la partie inférieure du tube (1) est prolongée par un fourreau de protection.

## Patentansprüche

1. Vorrichtung für die Entnahme von Flüssigkeitsproben aus einem Tank oder einem chemischen Reaktionsgefäß, bestehend aus einem Becher (4), den eine Bewegungsvorrichtung in einem Rohr (1) bewegt, wobei der Becher sich in zwei Positionen bewegen läßt, eine Position, in der er in eine in einem chemischen Reaktionsgefäß (2) befindliche Flüssigkeit (3) getaucht wird, und eine Position, in der er sich auf Höhe eines Sammlers (12) befindet, gekennzeichnet durch die Tatsache, daß der Becher (4) einen Hohlraum (7), Füllöffnungen (6, 6') und eine Abflußleitung (5) aufweist, und durch die Tatsache, daß der Becher (4), dessen Füllöffnungen und Abflußleitung frei von Verschlußmöglichkeiten sind, dazu bestimmt ist, in einer Position so in die Flüssigkeit (3) eingetaucht zu werden, daß die Flüssigkeit (3) über die Füllöffnungen (6, 6') in den Hohlraum (7) eindringen kann, und dazu bestimmt ist, sich in einer anderen Position so über dem Sammler (12) zu befinden, daß die Flüssigkeit im Hohlraum (7) über die Abflußleitung (5) in eine Öffnung (18) fließen kann und in ein Eingangsventil (16) und in ein Entnahmeventil (13) fließen kann.

2. Entnahmevorrichtung laut Anspruch 1, gekennzeichnet durch die Tatsache, daß die Abflußleitung (5) im unteren Teil des Bechers (4) so in einem Winkel angebracht ist, daß die im Becher befindliche Flüssigkeit unter Bildung eines durchgehenden Strahls Vollkommen abfließen kann.

3. Entnahmevorrichtung laut Anspruch 1, gekennzeichnet durch die Tatsache, daß der Sammler (12) in seinem oberen Teil eine konische Form aufweist, so daß eine Rinne zum Auffangen der Flüssigkeit entsteht.

4. Entnahmevorrichtung laut Anspruch 1, gekennzeichnet durch die Tatsache, daß das Rohr (1) eine Öffnung (18) für den Einlauf der Flüssigkeit und eine Auslaßöffnung (19) für den Rücklauf der Flüssigkeit aufweist, und durch die Tatsache, daß zwischen den beiden Öffnungen (18 und 19) ein Eingangsventil (16), ein Entnahmeventil (13) und ein Auslaßventil (17) angebracht sind.

5. Entnahmevorrichtung laut Anspruch 1, gekennzeichnet durch die Tatsache, daß der Becher (4) über eine Stange (8) mit einer aus einem Kolben (9) und einem Zylinder (10) bestehenden Bewegungsvorrichtung verbunden ist.

6. Entnahmevorrichtung laut Anspruch 1, gekennzeichnet durch die Tatsache, daß der untere Teil des Rohres (1) durch eine Schutzmanschette verlängert ist.

## Claims

1. Device for taking samples from a liquid in a tank or chemical reaction vessel and comprising a cup (4) which is moved by a transfer mechanism in a tube (1), the cup being movable to two positions, one being a position in which it is immersed in a liquid (3) contained in a chemical reaction vessel (2), and another being a position in which the cup is at the level of a collector (12), and characterized by the fact that the cup (4) contains a cavity (7), filling openings (6,6') and an outlet pipe (5), and by the fact that the cup (4), the filling openings and outlet pipe of which cannot be sealed, is intended in one position to be immersed in the liquid (3) in such a way that the liquid (3) can enter the cavity (7) through the filling openings (6,6') and is intended in another position to be located above the collector (12) in such a way that the liquid contained in the cavity (7) can flow through the outlet pipe (5) into an opening (18) and flow off into an inlet valve (16) and into a sampling valve (13).

2. Sampling device according to claim 1 and characterized by the fact that the outlet pipe (5) is arranged at an angle in the lower part of the cup (4) in such a way that the liquid contained in the cup can flow away completely as a continuous trickle.

3. Sampling device according to claim 1 and characterized by the fact the upper part of the collector (12) has a conical shape in such a way as to be a recovery channel for the liquid.

4. Sampling device according to claim 1 and characterized by the fact that the tube (1) contains an opening (18) for the admission of the liquid and a drainage opening (19) for the return of the liquid and by the fact that an inlet valve (16), a sampling valve (13) and a drainage valve (17) are located between the two openings (18 and 19).

5. Sampling device according to claim 1 and characterized by the fact that the cup (4) is connected by a rod (8) to a transfer mechanism consisting of a piston (9) and a cylinder (10).

6. Sampling device according to claim 1 and characterized by the fact that the lower part of the tube (1) is extended in the form of a protective sheath.
